# DEMANDE DE BREVET EUROPEEN

(11) **EP 1 956 611 A1**
(43) Date de publication de la demande: **13.08.2008**
(21) Numéro de dépôt: 08151140.4
(22) Date de dépôt: 07.02.2008
(51) Int. Cl.: H01B 7/295, C08L 61/06, H01B 3/36, H01B 3/44

(54) **Cabble d'énergie et/ou de télécommunication aux propriétés ingnifugeantes améliorées**

(30) Priorité: 09.02.2007 FR 0753160
(71) Demandeur: Nexans, 75008 Paris (FR)
(72) Inventeur: Piechaczyk, Arnaud, 69006 Lyon (FR); Pinto, Olivier, 69003 Lyon (FR); Fournier, Jerôme, 69006 Lyon (FR); Tribut, Laurent, 69003 Lyon (FR); Fenouillot, Francoise, 38080 L'Isle D'Abeau (FR); Pascault, Jean-Pierre, 69100 Villeurbanne (FR)
(74) Mandataire: Feray, Valérie

(57) **Abrégé**

La présente invention concerne un câble d'énergie et/ou de télécommunication comportant au moins une couche en un matériau obtenu à partir d'une composition comprenant une matrice polymère thermoplastique, et une résine phénolique, caractérisé en ce que ladite résine phénolique est choisie parmi les résines phénol formaldéhyde novolacs et les résines novolacs cyanate ester, et en ce que ledit matériau comprend des nodules de résines phénoliques durcies dispersés dans tout le matériau.

## Description

La présente invention concerne un câble d'énergie et/ou de télécommunication aux propriétés ignifugeantes améliorées.

Le document FR-2 684 793 décrit un matériau comprenant une matrice polaire de type copolymère d'éthylène, une matrice apolaire choisie parmi le polypropylène et les polyéthylènes, et une résine phénolique de type résole comprenant des groupements méthylol terminaux et des hydroxydes métalliques.

Ce matériau, dont les propriétés mécaniques et les propriétés de vieillissement thermique ne nécessitent pas la réticulation de la matrice thermoplastique, est utilisé notamment pour l'isolation de câbles électriques.

Toutefois, ce type de matériau isolant montre des résultats de réactions au feu non optimisés et des propriétés mécaniques peu satisfaisantes.

Aussi le problème technique à résoudre, par l'objet de la présente invention, est de proposer un câble d'énergie et/ou de télécommunication comportant au moins une couche en un matériau obtenu à partir d'une composition comprenant une matrice polymère thermoplastique, et une résine phénolique, ledit câble permettant d'éviter les problèmes de l'état de la technique en offrant notamment une tenue au feu améliorées de façon significative, tout en conservant de très bonnes propriétés mécaniques.

La solution du problème technique posé réside, selon la présente invention, dans le fait que la résine phénolique est choisie parmi les résines phénol formaldéhyde novolacs et les résines novolacs cyanate ester, et que ledit matériau comprend des nodules de résines phénoliques durcies dispersés dans tout le matériau.

Qu'il soit électrique ou optique, destiné au transport d'énergie ou à la transmission de données, un câble est schématiquement constitué d'au moins un élément conducteur électrique ou optique s'étendant à l'intérieur d'au moins un élément isolant.

Il est à noter qu'au moins un des éléments isolants peut également jouer le rôle de moyen de protection et/ou que le câble peut disposer en outre d'au moins un élément de protection spécifique formant une gaine, notamment pour les câbles électriques.

Dans la présente invention, la couche peut être un élément isolant ou une gaine de protection.

La Demanderesse a effectué des essais intensifs pour trouver des matériaux permettant de garantir de très bonnes performances au feu.

Ainsi, elle a sélectionné deux types de résines phénoliques durcissables, à savoir les résines phénol formaldéhyde novolacs et les résines novolacs cyanate ester.

Les résines phénoliques de type novolac sont généralement formées par la réaction d'un phénol avec un formaldéhyde en présence de catalyseurs acides tel qu'un acide minéral ou un acide organique fort.

Le ratio molaire phénol/formaldéhyde est égal ou supérieur à 1, de préférence le ratio molaire est compris entre 1/0,4 et 1/0,9.

L'excès de phénol permet ainsi de garantir des fins de chaînes comprenant des cycles phénols.

Ces résines phénoliques novolacs sont typiquement des solides ayant des points de fusion compris entre 40 et 110°C et des masses molaires comprises entre 250 et 900 g/mole.

En général, elles sont représentées par la formule I suivante : 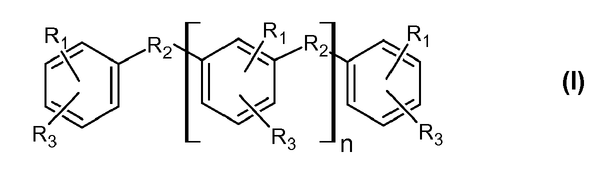 dans laquelle n est un entier supérieur ou égale à 0, de préférence n est compris entre 0 et 9.

Selon la présente invention, les résines phénol formaldéhyde novolacs comprennent un reste R₁ de type OH, un reste R₂ de type méthyle, et un reste R₃ de type hydrogène ou alkyle.

Selon la présente invention, les résines novolacs cyanate ester comprennent un reste R₁ de type cyanate ester, un reste R₂ de type méthyle, et un reste R₃ de type hydrogène ou alkyle.

Il est bien connu que les résines phénol formaldéhyde novolacs nécessitent l'ajout d'un agent de durcissement pour permettre leur réticulation.

L'agent de durcissement peut être de préférence l'hexaméthylène tétramine (HMTA), mais peut également être toute autre espèce chimique susceptible d'induire la réticulation de la résine phénol formaldéhyde novolac.

Dans un mode de réalisation particulier, lorsque l'agent de durcissement est l'HMTA, la composition comprend au plus 20% en poids d'HMTA par rapport au poids de la résine phénol formaldéhyde novolac, de préférence au plus 10% en poids.

Le rapport massique préféré de la résine phénol formaldéhyde novolac sur l'HTMA est de l'ordre de 90/10 et permet d'obtenir à la fois une cinétique de réticulation rapide et de bonnes propriétés thermomécaniques.

Au contraire, les résines novolacs cyanate ester n'ont pas besoin d'un agent de durcissement pour permettre leur réticulation.

Les compositions selon la présente invention comprenant une résine novolac cyanate ester peuvent en outre comprendre un catalyseur de réticulation des groupements cyanate ester, comme par exemple des sels métalliques ou des composés du type imidazole.

Selon une caractéristique essentielle de l'invention, la matrice polymère de la composition doit être thermoplastique.

En effet, la composition doit pouvoir subir des déformations sous l'action de la chaleur sans altérer ses propriétés de tenue au feu et ses propriétés mécaniques, notamment lors de son extrusion en tant que couche pour câbles d'énergie et/ou de télécommunication.

Ainsi la composition doit rester thermoplastique pour obtenir le matériau selon la présente invention.

Plus particulièrement, la matrice polymère thermoplastique doit garder ses propriétés thermoplastiques après l'ajout de la résine phénolique selon la présente invention.

De préférence, la composition comprend au moins 50% en poids de ladite matrice polymère thermoplastique, de préférence au moins 70% en poids.

Dans un mode de réalisation particulier, la composition comprend au plus 30% en poids de résine phénolique afin d'obtenir un bon compromis entre la tenue au feu et les propriétés mécaniques de la couche déposée sur le câble.

Avantageusement, le matériau selon la présente invention comprend des nodules de résines phénoliques durcies, ces nodules étant dispersés de façon homogène au sein de tout le matériau, ou en d'autres termes, dans toute l'épaisseur de la couche dudit câble.

Le câble d'énergie et/ou de télécommunication comportant au moins une couche en ledit matériau présente ainsi des propriétés de tenue au feu ainsi que des propriétés mécaniques optimisées.

On entend par « nodules de résines phénoliques durcies » des particules de résines phénoliques durcies in situ c'est-à-dire durcies à l'intérieur même de la matrice polymère thermoplastique.

Par conséquent, le matériau selon la présente invention est obtenu à partir d'une composition comprenant une matrice polymère thermoplastique polaire et une résine phénolique non encore durcie lors de son incorporation dans ladite composition.

Le durcissement in situ de la résine phénolique permet avantageusement de faciliter la mise en oeuvre ainsi que la dispersion de la résine phénolique dans la matrice polymère thermoplastique, préalablement au durcissement de ladite résine.

On parle alors plus particulièrement d'un matériau comprenant des « nodules » de résines phénoliques durcies dispersés dans tout le matériau.

Pour obtenir ces nodules dispersés de façon homogène au sein de tout le matériau, il est préférable que la matrice polymère thermoplastique soit polaire.

En effet, le caractère polaire de ladite matrice permet d'obtenir avantageusement une composition dans laquelle la résine phénolique est totalement ou partiellement miscible dans ladite matrice, et ainsi obtenir une couche, de préférence extrudée, dans laquelle sont réparties de façon homogène les nodules de résines phénoliques durcies.

Pour ce faire, et de façon non limitative, la matrice polymère thermoplastique polaire peut comprendre un polymère thermoplastique polaire choisi parmi les polymères et/ou les copolymères d'oléfine contenant au moins un groupement polaire, les polyuréthanes, les polyesters, les oligoesters cycliques, et les polychlorures de vinyle, ou leur mélange.

Ledit copolymère d'oléfine est de préférence un copolymère d'éthylène pouvant être choisi parmi un copolymère d'éthylène acétate de vinyle (EVA), un copolymère d'éthylène butyle acrylate (EBA), un copolymère d'éthylène méthyle acrylate (EMA) et un copolymère d'éthylène éthyle acrylate (EEA).

Ledit polymère d'oléfine est de préférence un polyéthylène greffé anhydride maléique (PEgMA) ou un polypropylène greffé anhydride maléique (PPgMA).

Bien entendu, la matrice polymère thermoplastique polaire peut également comprendre un ou plusieurs polymères apolaires du type polypropylène ou polyéthylène, les polymères polaires devant être majoritaires par rapport aux polymères apolaires pour ne pas dégrader les propriétés polaires de ladite matrice.

Selon une caractéristique préférée de l'invention, la réticulation de la résine phénolique peut s'effectuer par thermodurcissement.

On parle alors de nodules de résines phénoliques thermodurcies.

Deux procédés de préparation d'une couche extrudée en un matériau selon la présente invention peuvent être envisagés en fonction de la réactivité de la résine phénolique novolac non encore durcie introduite dans la composition, l'extrusion ne limitant pas l'objet de la présente invention.

Ces deux procédés de préparation concernent le thermodurcissement de la résine phénolique in situ afin d'obtenir un matériau comprenant des nodules de résines phénoliques durcies, conformément à la présente invention.

Afin d'éviter la réticulation prématurée de la résine phénolique, le ou les polymères qui composent ladite matrice doivent avoir une température de transition vitreuse et/ou une température de ramollissement inférieure(s) à la température de réticulation de la résine phénolique afin de favoriser le mélange de la résine dans la matrice et d'homogénéiser ainsi la composition.

De préférence, la température de transition vitreuse desdits polymères thermoplastiques polaires est inférieure à 150°C.

Pour une résine peu réactive, un procédé de préparation discontinu est préféré.

Dans une première étape dite de mélange, la matrice polymère et la résine phénolique durcissable sont mélangés à une température comprise entre d'une part la température de ramollissement et/ou la température de transition vitreuse de la matrice thermoplastique et d'autre part la température de début de réticulation de la résine thermodurcissable pour laisser le temps au mélange de s'homogénéiser.

Cette première étape peut s'effectuer indifféremment dans un mélangeur interne, une extrudeuse bi-vis, sur cylindres de mélange ou tout autre outil de mélange de polymères en voie fondue.

Dans une seconde étape dite de réticulation, le mélange de la première étape est retravaillé en mélangeur ou sur cylindres à la température de réticulation optimale de la résine thermodurcissable.

Cette seconde étape permet ainsi à la résine phénolique de durcir in situ et de se disperser de façon homogène dans toute la masse du matériau.

Le temps et la température de réticulation dépendent de la résine phénolique choisie.

Dans une troisième étape dite d'extrusion, le matériau homogène obtenu est extrudé sur un ou plusieurs conducteurs nus ou isolés à l'aide d'une extrudeuse.

Pour une résine plus réactive, le mélange et la formation des nodules thermodurs peuvent être réalisés par un procédé en une seule étape.

Le profil de température est croissant de la température de ramollissement de la matrice thermoplastique jusqu'à la température de réticulation de la résine thermodurcissable, typiquement elle peut augmenter dans une fourchette de 70 à 220°C.

La vitesse de rotation et le profil des vis ainsi que le débit des doseurs d'alimentation de l'extrudeuse peuvent être déterminés facilement par l'homme du métier afin de garantir un temps de séjour suffisant pour que l'optimum de réticulation de la résine phénolique durcissable soit atteint.

Avantageusement, la couche extrudée présente des performances de tenue au feu améliorée de façon significative tout en gardant des propriétés mécaniques satisfaisantes.

Dans un autre mode de réalisation particulier, la composition comprend une charge inorganique, de préférence un hydroxyde métallique du type dihydroxyde de magnésium (MDH) ou trihydroxyde d'aluminium (ATH).

La charge inorganique peut également être choisie parmi les carbonates, les oxydes, les argiles et les silicates bien connus de l'homme du métier.

De façon particulièrement avantageuse, la combinaison des nodules de résines phénoliques durcies avec une ou plusieurs charges inorganiques de type ignifugeante permet d'atteindre des résultats de réaction au feu améliorés de façon significative, notamment avec une quantité de charge inorganique bien inférieure à celle utilisé dans l'art antérieur.

Dans un autre mode de réalisation, la composition comprend un agent compatibilisant.

L'agent compatibilisant est un polymère thermoplastique greffé ou copolymérisé avec des groupements fonctionnels, le polymère thermoplastique étant miscible dans la matrice polymère thermoplastique et les groupements fonctionnels réactifs améliorant l'interface avec la résine phénolique.

Par exemple, lorsque la matrice polymère thermoplastique est à base d'EVA, l'agent compatibilisant peut être un copolymère d'éthylène acétate de vinyle et d'anhydride maléique du type OREVAC commercialisé par la société Arkema.

L'agent compatibilisant permet de diminuer la rigidité du matériau thermoplastique en réduisant la taille des particules, plus particulièrement la taille des nodules formés in situ dans le matériau.

A titre d'exemple, l'agent compatibilisant permet de réduire la taille des nodules d'un facteur 2, la taille des nodules passant de l'ordre de 1 µm à 0,5 µm.

De préférence, il peut être incorporé à la composition avec un rapport massique de la matrice polymère sur l'agent compatibilisant de l'ordre de 90/10.

D'autres caractéristiques et avantages de la présente invention apparaîtront à la lumière des exemples qui vont suivre, lesdits exemples étant donnés à titre illustratif et nullement limitatif.

Afin de montrer les avantages des matériaux obtenus à partir des compositions selon la présente invention, le Tableau 1 détaille les différents constituants desdites compositions selon l'invention et selon l'art antérieur, dont les propriétés mécaniques et de résistances au feu sont étudiées.

Il est à noter que dans le tableau 1 ci-après :
- les quantités mentionnées de l'EVA 28, de la résine novolac et de l'HTMA sont exprimées en % en poids par rapport au poids de la composition, et
- les quantités mentionnées du MDH et de l'ATH sont exprimées en parties en poids (pcr) pour 100 parties du mélange constitué de la matrice polymère, de la résine phénolique si existante, et de l'agent de durcissement si existant.

**Tableau 1**

| Composition | EVA28 | Novolac | HMTA | MDH | ATH |
|---|---|---|---|---|---|
| 1 | 100 | 0 | 0 | 0 | 0 |
| 2 | 80 | 20 | 0 | 0 | 0 |
| 3 | 80 | 18 | 2 | 0 | 0 |
| 4 | 80 | 18 | 2 | 50 | 0 |
| 5 | 80 | 18 | 2 | 100 | 0 |
| 6 | 80 | 18 | 2 | 150 | 0 |
| 7 | 80 | 20 | 0 | 150 | 0 |
| 8 | 100 | 0 | 0 | 150 | 0 |
| 9 | 80 | 18 | 2 | 0 | 150 |
| 10 | 100 | 0 | 0 | 0 | 150 |

L'origine des différents constituants du Tableau 1 est la suivante :
- EVA28 (matrice polymère) correspond au copolymère d'éthylène vinyle acétate référencé Evatane 2803, commercialisé par la société Arkema.
- Novolac correspond à la résine novolac référencé 4439X, commercialisée par la société Dynea.
- HMTA correspond à l'hexaméthylène tétramine commercialisé par la société Aldrich.
- MDH correspond à l'hydroxyde de magnésium référencé Magnifin H10, commercialisé par la société Albemarle.
- ATH correspond au trihydroxyde d'aluminium référencé Martinal OL104 WE, commercialisé par Albemarle.

Les compositions référencées 1, 2, 7, 8 et 10 correspondent à des essais comparatifs dont les compositions ne comprennent pas d'agent de durcissement, tandis que les compositions référencées 3 à 6 et 9 sont celles relatives à la présente invention.

Pour étudier les propriétés mécaniques et de réaction au feu, des échantillons 1 à 10 correspondant respectivement aux compositions 1 à 10 du Tableau 1, ont été préparées selon le protocole de thermodurcissement détaillé ci-après.

La masse totale préparée pour chaque échantillon est fixée à 250 g.

Les échantillons sont préparés dans un mélangeur interne à 110°C et à 50 tr/min. Dans un premier temps, on introduit l'EVA28, puis la charge ignifugeante lorsque celle-ci est présente dans la composition, et enfin la Novolac, ladite composition étant mélangée pendant 15 minutes.

Chaque mélange est ensuite homogénéisé sur des cylindres de mise en forme.

Dans les compositions contenant de l'HMTA, on introduit cet agent de durcissement directement sur cylindres, le temps de mise en oeuvre étant de 30 minutes à 150°C, cette température étant la température de réticulation de la résine phénol formaldéhyde novolac.

Ainsi, la résine novolac est thermodurcie dans les compositions 3 à 6 et 9.

Par conséquent, les échantillons respectifs obtenus à partir des compositions 3 à 6 et 9 comprennent des nodules thermodurs dispersés dans toute leur matrice EVA28.

Pour les essais au feu, chaque échantillon ainsi obtenu est façonné en plaques carrées de 10 cm de côté et de 3 mm d'épaisseur à l'aide d'une presse et d'un moule calibré.

La température de pressage est de 120°C, le temps de pressage de 5 minutes et la pression est fixée à 100 bars.

Le comportement au feu est évalué à l'aide d'un cône calorimètre. Les essais de cône calorimètre sont menés avec un flux incident de 50 kW/m² suivant la norme ISO 5660-1.

Ces essais permettent de mesurer le temps d'ignition exprimé en seconde, le pic de chaleur dégagée exprimé en kW/m² et la chaleur dégagée moyenne exprimée en kW/m² pour chaque échantillon.

Plus le pic de chaleur dégagée ainsi que la chaleur dégagée moyenne sont faibles numériquement, meilleures sont les propriétés ignifugeantes de la composition et inversement pour la valeur du temps d'ignition.

Pour évaluer les propriétés mécaniques des différents échantillons, les plaques d'essais de traction sont mises en oeuvre dans les mêmes conditions que celles énoncées précédemment, mais avec un moule calibré de 1 mm d'épaisseur.

Les essais de traction sont pratiqués sur des éprouvettes normalisées de type H2 d'épaisseur 1mm et avec une vitesse de traverse de 200 mm/min.

Ces essais permettent d'obtenir les contraintes et allongements à la rupture, exprimés respectivement en MPa et en %, pour chaque échantillon.

Les résultats des essais de performances au feu et de rupture pour les échantillons 1 à 10 sont rassemblés dans les Tableaux 2 à 4 qui suivent.

Afin de montrer l'amélioration des performances au feu apportées par le durcissement de la résine phénol formaldéhyde novolac, l'échantillon 3 est comparé aux échantillons 1 et 2 selon les résultats du Tableau 2.

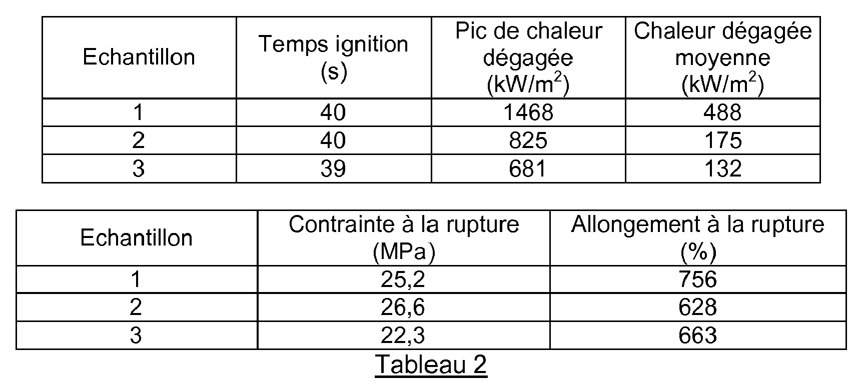

Tout d'abord, les valeurs du pic de chaleur dégagée et de la chaleur dégagée moyenne ont nettement diminuées après l'ajout de seulement 20% de résine novolac.

De plus, la réticulation de la résine novolac par l'HMTA permet d'accroitre, de façon remarquable, l'influence de la résine novolac sur les propriétés au feu de l'échantillon 3 comme en témoigne l'écart entre les échantillons 2 et 3, les propriétés mécaniques restant par ailleurs très bonnes pour une utilisation comme matériau en câblerie.

Par ailleurs, les échantillons 4 à 6, référencés dans le Tableau 3, permettent de mettre en évidence la synergie entre la résine novolac durcie et l'ajout d'une charge ignifugeante dans la composition selon la présente invention.

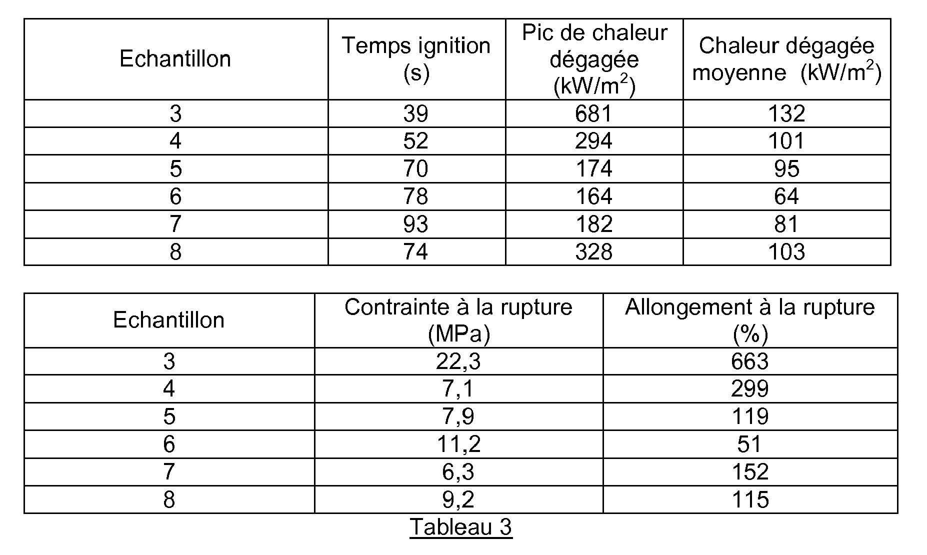

Une comparaison entre l'échantillon 8 et l'échantillon 4 montre qu'en présence de l'agent de durcissement, on peut réduire la proportion de MDH à 50 pcr tout en conservant des propriétés au feu équivalentes.

De plus, de façon particulièrement avantageuse, l'échantillon 4 a un allongement à la rupture 2,6 fois plus élevé que celui de l'échantillon 8.

Ensuite, l'échantillon 6 permet de mettre en évidence, en comparaison avec l'échantillon 7, l'intérêt de combiner la résine novolac avec l'agent de durcissement en présence d'une charge ignifugeante sur l'optimisation des propriétés ignifugeantes, lesdites propriétés de l'échantillon 6 étant améliorées par rapport à celles de l'échantillon 7.

En effet, on peut remarquer que le pic de chaleur dégagée et la chaleur dégagée moyenne ont diminué en raison de la réticulation de la résine phénol formaldéhyde novolac (échantillon 6).

Enfin, en comparant les échantillons 6 et 8 au vu de leur propriété ignifugeante, l'association de 150 pcr de MDH avec la novolac durcie permet de réduire exceptionnellement, de l'ordre de 50%, le pic de chaleur dégagée ainsi que la chaleur dégagée moyenne pour un temps d'ignition similaire.

Le Tableau 4 montre la synergie entre la résine novolac durcie et l'ajout d'ATH, en tant que charge ignifugeante, dans la composition selon la présente invention.

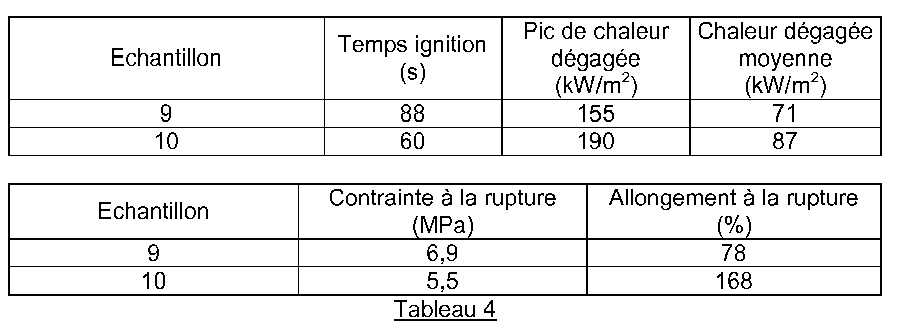

Il apparaît clairement que le temps d'ignition ainsi que le pic de chaleur dégagée et la chaleur dégagée moyenne de l'échantillon 9 sont meilleurs que ceux de l'échantillon 10.

Pour valider ce type d'échantillons sur câble, des échantillons similaires aux échantillons 1 à 10 ont été préparés suivant le protocole de thermodurcissement décrit précédemment.

Cependant, l'étape d'introduction de l'agent de durcissement directement sur cylindre est suivie par une étape d'extrusion desdits échantillons sur un fil de cuivre de 2.5 mm² de section, l'extrusion se déroulant avec un profil de température compris entre 120 et 150°C.

Le fil de cuivre est ainsi entouré d'une couche en un matériau extrudé correspond aux échantillons 1 à 10 obtenu à partir des compositions du Tableau 1, ladite couche ayant une épaisseur de 650 µm.

Ce type de préparation fait référence au procédé dit discontinu, mentionné au préalable dans la présente description.

Les essais au feu sont réalisés en cône calorimètre avec un flux incident de 50 kW/m² sur 32 morceaux de ces conducteurs isolés de 10cm de longueur disposés parallèlement et maintenus ensemble par un fil de cuivre.

Les résultats de chaleur dégagée sont rassemblés dans le Tableau 5 suivant :

**Tableau 5**

| Echantillon extrudé sur fil de cuivre | Pic de chaleur dégagée (kW/m²) | Chaleur dégagée moyenne (kW/m²) |
|---|---|---|
| 1 | 516 | 180 |
| 2 | 280 | 59 |
| 3 | 243 | 49 |
| 4 | 106 | 34 |
| 5 | 59 | 30 |
| 6 | 88 | 26 |
| 7 | 65 | 27 |
| 8 | 119 | 41 |
| 9 | 52 | 21 |
| 10 | 73 | 30 |

Les temps d'ignition sont identiques à ceux des Tableaux 2 à 4. Le pic de chaleur dégagée et la chaleur dégagée moyenne sont proportionnels aux résultats obtenus sur les plaques moulées (voir Tableaux 2 à 4).

Ainsi, les conclusions relatives aux résultats des échantillons 1 à 10 moulés sont identiques à celles relatives aux résultats des échantillons extrudés sur un conducteur électrique.

## Revendications

1. Câble d'énergie et/ou de télécommunication comportant au moins une couche en un matériau obtenu à partir d'une composition comprenant :
- une matrice polymère thermoplastique, et
- une résine phénolique,
**caractérisé en ce que** ladite résine phénolique est choisie parmi les résines phénol formaldéhyde novolacs et les résines novolacs cyanate ester, et **en ce que** ledit matériau comprend des nodules de résines phénoliques durcies dispersés dans tout le matériau.

2. Câble selon la revendication 1, **caractérisé en ce que** la composition comprend au moins 50% en poids de ladite matrice polymère, de préférence au moins 70% en poids.

3. Câble selon la revendication 1 ou 2, **caractérisé en ce que** la matrice polymère thermoplastique comprend un polymère et/ou un copolymère d'oléfine contenant au moins un groupement polaire.

4. Câble selon la revendication 3, **caractérisé en ce que** le copolymère d'oléfine est choisi parmi un copolymère d'éthylène acétate de vinyle (EVA), un copolymère d'éthylène butyle acrylate (EBA), un copolymère d'éthylène méthyle acrylate (EMA) et un copolymère d'éthylène éthyle acrylate (EEA).

5. Câble selon la revendication 3, **caractérisé en ce que** le polymère d'oléfine est un polyéthylène greffé anhydride maléique (PEgMA) ou un polypropylène greffé anhydride maléique (PPgMA).

6. Câble selon l'une quelconque des revendications précédentes, **caractérisé en ce que** la composition comprend au plus 30% en poids de résine phénolique.

7. Câble selon l'une quelconque des revendications précédentes, **caractérisé en ce que** la composition comprend une charge inorganique.

8. Câble selon la revendication 7, **caractérisé en ce que** la charge inorganique est un hydroxyde métallique.

9. Câble selon la revendication 8, **caractérisé en ce que** l'hydroxyde métallique est le dihydroxyde de magnésium (MDH) ou le trihydroxyde d'aluminium (ATH).

10. Câble selon l'une quelconque des revendications précédentes, **caractérisé en ce que** la composition comprend un agent compatibilisant.

11. Câble selon la revendication 10 prise en combinaison avec la revendication 4, **caractérisée en ce que** l'agent compatibilisant est un copolymère d'éthylène acétate de vinyle et d'anhydride maléique.

12. Câble selon l'une quelconque des revendications précédentes, **caractérisé en ce que**, lorsque la résine phénolique est une résine phénol formaldéhyde novolac, ladite composition comprend en outre un agent de durcissement.

13. Câble selon la revendication 12, **caractérisé en ce que** l'agent de durcissement est l'hexaméthylène tétramine (HMTA).

14. Câble selon la revendication 13, **caractérisé en ce que** le rapport massique de la résine phénol formaldéhyde novolac sur l'HMTA est de l'ordre de 90/10.

15. Câble selon l'une quelconque des revendications précédentes, **caractérisé en ce que** la matrice polymère thermoplastique est polaire.
